# EUROPEAN PATENT SPECIFICATION

(11) **EP 1 266 921 B1**
(45) Date of publication and mention of the grant of the patent: **28.07.2004**
(21) Application number: 01932281.7
(22) Date of filing: 28.05.2001
(51) Int. Cl.: C08G 59/20, C08G 59/50, C08G 59/68, C08J 5/24

(54) **EPOXY RESIN COMPOSITION FOR FIBER-REINFORCED COMPOSITE MATERIAL**
EPOXYHARZZUSAMMENSETZUNG FÜR FASERVERBUNDMATERIALIEN
COMPOSITION DE R SINE POXY POUR MATI RE COMPOSITE RENFORC E PAR DES FIBRES

(30) Priority: 30.05.2000 JP 2000159885
(43) Date of publication of application: 18.12.2002
(73) Proprietor: TORAY INDUSTRIES, INC., Tokyo 103-8666 (JP)
(72) Inventor: OOSEDO, Hiroki, Iyo-gun, Ehime 791-3120 (JP); KOUCHI, Shinji, Matsuyama-shi, Ehime 790-0964 (JP); KAMAE, Toshiya, Matsuyama-shi, Ehime 790-0047 (JP)
(74) Representative: Coleiro, Raymond
(86) International application number: PCT/JP2001/004429
(87) International publication number: WO 2001/092368

(56) References cited:
- GB-A- 919 779
- GB-A- 967 351
- JP-A- 11 158 251
- JP-A- 11 171 980
- US-A- 4 115 296
- US-A- 4 130 511
- US-A- 5 599 628
- PATENT ABSTRACTS OF JAPAN vol. 1999, no. 11, 30 September 1999 (1999-09-30) & JP 11 158251 A (SUMITOMO BAKELITE CO LTD), 15 June 1999 (1999-06-15)
- PATENT ABSTRACTS OF JAPAN vol. 1999, no. 11, 30 September 1999 (1999-09-30) & JP 11 171980 A (SUMITOMO BAKELITE CO LTD), 29 June 1999 (1999-06-29)

## Description

The present invention relates to an epoxy resin composition for fibre-reinforced composite materials which is suitable for use in moulding methods such as the RTM method, and it relates to an epoxy resin composition for fibre-reinforced composite materials where the moulded articles obtained by the combination thereof with reinforcing fibre, and then heating and curing, are suitable for use as aircraft components, spacecraft components, artificial satellite components and the like.

Fibre-reinforced composite materials comprising reinforcing fibre and a matrix resin are light and possess outstanding mechanical properties, so they are widely used in sports, aerospace and general industrial applications.

Thermosetting resins or thermoplastic resins are employed as the matrix resin in fibre-reinforced composite materials, but thermosetting resins are chiefly used. Amongst these, epoxy resins, which are provided with outstanding characteristics such as high heat resistance, high elastic modulus, low shrinkage on curing and high chemical resistance, are most often employed.

As epoxy resin curing agents, there are used, for example, polyamines, acid anhydrides, imidazole derivatives. Here, a polyamine means a compound having a plurality of amine-type nitrogen atoms within the molecule and, furthermore, having a plurality of active hydrogens. Furthermore, 'active hydrogen' refers to a hydrogen atom which is bonded to an amine-type nitrogen atom. Polyamines have a long history of use and are curing agents of broad applicability. They are the widest used both in terms of type and amount and, currently, are indispensable in practical terms as curing agents for the epoxy resins used for fibre-reinforced composite materials.

In the case where an epoxy resin composition is employed in fibre-reinforced composite material applications, there will inevitably be included a stage in which reinforcing fibre is impregnated with the epoxy resin composition, so rheological control techniques for achieving a low resin viscosity, etc, are extremely important.

In the moulding methods for obtaining a composite material by impregnating reinforcing fibre with a liquid resin such as hand lay-up, pultrusion, filament winding and RTM, impregnation faults may arise if the viscosity is high. On the other hand, if production is carried out in a high temperature environment in order to reduce the resin viscosity, while the impregnation properties are indeed enhanced, curing of the epoxy resin during moulding is promoted. Now, in recent years, in RTM, there has been an increasing demand for techniques for raising the properties of the cured material obtained.

On the other hand, in the method of moulding a composite material using a prepreg as an intermediate substrate, there is added a high molecular weight compound such as a thermoplastic resin or rubber for the purposes of raising the resin toughness, but if the added amount of the high molecular weight compound is too great, the viscosity of the resin with enhanced toughness becomes excessive and resin impregnation faults can arise, so there has been a considerable demand for a technique for lowering the resin viscosity.

As disclosed in, for example, page 108 of "Nyumon Epokishi Jushi (An Introduction to Epoxy Resins)" (by Soichi Murai and Hidekazu Ishimura, published by the Kobunshi Kankokai, 1988), as a technique for reducing the viscosity of an epoxy resin a known method is that of incorporating a low viscosity epoxy compound such as a monoepoxy compound or an aliphatic polyglycidyl ether, but the cured material obtained from an epoxy resin composition in which such a low viscosity epoxy compound has been incorporated may show impaired heat resistance.

Alicyclic epoxy resins are of comparatively low viscosity, and the heat resistance of the cured material obtained by the heating thereof is known to be high. However, as described in the "Epoxy Resin Handbook" (edited by Masaki Shinpo, published by the Nikkan Kogyo Shinbunsha, 1987), when polyamines are used as the curing agent there is the problem that curing is slow and impractical.

In view of this difficulty, as a method for carrying out the reaction between an alicyclic epoxy resin and a polyamine as the curing agent under practical reaction conditions, in US -A-4115296 (corresponding JP-A-52-082998) there is proposed a method in which a carboxylic acid salt such as magnesium trichloroacetate is added, and in US -A-4130511 (corresponding JP-A-52-145500) there is proposed a method in which a nitrate such as magnesium nitrate is added.

However, in order to raise the solubility of these salts in the epoxy resin composition, it is necessary that they be added to the resin in the form of an organic solution, so organic solvent remains in the epoxy resin interior, with the result that problems arise such as voids being produced in the cured material obtained and the heat resistance being impaired.

As a further method for conducting reaction between an alicyclic epoxy resin and a polyamine curing agent under practical reaction conditions, there is the method disclosed in US-A-5599628 in which there is incorporated a polyphenol compound such as bisphenol S as an accelerator. However, polyphenol compounds do not possess latency and therefore they have the disadvantage that resin viscosity is raised as a result of the incorporation thereof.

Consequently, it has been extremely difficult to use a resin composition comprising an alicyclic epoxy resin and a polyamine curing agent in moulding methods such as RTM which employ a low viscosity liquid epoxy resin.

The objective of the present invention lies in offering an epoxy resin composition for fibre-reinforced composite materials which is of low viscosity and which is suitable for use in moulding methods such as RTM; more particularly, offering an epoxy resin composition for fibre-reinforced composite materials where the cured material obtained by heating has high level heat resistance and strength properties, and which is suitable for use as aircraft components, spacecraft components, artificial satellite components and the like

According to one aspect, the present invention provides an epoxy resin composition for a fibre-reinforced composite material, which contains the following components (A), (B) and (C) :
(A) alicyclic epoxy resin
(B) polyamine
(C) latent acid catalyst which can dissolve in component (A) or in component (B) and which is of at least one type selected from strong acid esters and complexes of a Lewis acid and a base.

Furthermore, according to another aspect the present invention provides a fibre-reinforced composite material containing, as constituent components, the aforesaid epoxy resin composition and reinforcing fibre.

Optimum embodiments of the invention will now be described.

As a result of painstaking research in view of the difficulties described above, we have found that problems referred to above are entirely resolved by employing, in fibre-reinforced composite material applications, an epoxy resin composition formed by mixing an alicyclic epoxy resin, a polyamine as the curing agent and a latent acid catalyst soluble in these components.

In accordance with the present invention, the epoxy resin is an epoxy compound having at least two 1,2-epoxy groups within the molecule, that is to say one which is at least difunctional.

Thus, component (A), which is an alicyclic epoxy resin, is an epoxy resin in which there is a 1,2-epoxycycloalkane as a structural moiety.

Specific examples are vinylcyclohexane diepoxide, 3,4-epoxycyclohexylmethyl-3,4-epoxycyclohexanecarboxylate, bis(3,4-epoxycyclohexylmethyl) adipate, dicyclopentadienediepoxide, dipentenedioxide, 1,4-cyclooctadienediepoxide and bis(2,3-epoxycyclopentyl)ether.

When an amine compound is added to an alicyclic epoxy resin, the nitrogen atom of the amine compound is directly bonded to the cyclic structure of the alicyclic epoxy resin, so molecular motion of the polymer chain produced is restricted and the heat resistance and modulus of elasticity of the cured material obtained are raised. However, hitherto, alicyclic epoxy resins have shown poor reactivity with polyamines and so have been impractical.

However, if a suitable acid catalyst is also present in the alicyclic epoxy resin, there is co-ordination of a proton or Lewis acid to the oxygen atom of the epoxy groups, making them susceptible to nucleophilic substitution, and it then becomes reactive with the polyamine under practical conditions of reaction.

In accordance with the present invention, component (B) is a polyamine. Specific examples are the acyclic aliphatic polyamines : diethylenetriamine, tetraethylene-pentamine, hexamethylenediamine, 1,3-pentanediamine and 2-methylpentamethylenediamine; the cyclic aliphatic polyamines : isophorone diamine, 4,4'-methylenebiscyclohexylamine, 4,4'-methylenebis(2-methylcyclohexylamine), bis(aminomethyl)norbornane, 1,2-cyclohexanediamine and 1,3-bisaminomethylcyclohexane; the aromatic polyamines : m-xylylenediamine, 4,4'-methylenedianiline, 4,4'-methylenebis(2-methylaniline), 4,4'-methylenebis(2-ethylaniline), 4,4'-methylenebis(2-isopropylaniline), 4,4'-methylenebis(2-chloroaniline), 4,4'-methylenebis(2,6-dimethylaniline), 4,4'-methylenebis(2,6-diethylaniline), 4,4'-methylenebis(2-isopropyl-6-methylaniline), 4,4'-methylenebis(2-ethyl-6-methylaniline), 4,4'-methylenebis(2-bromo-6-ethylaniline), 4,4'-methylenebis(N-methylaniline), 4,4'-methylenebis(N-ethylaniline), 4,4'-methylenebis(N-sec-butylaniline), 4,4'-diaminodiphenylsulfone, 3,3'-diaminodiphenylsulfone, 4,4'-cyclohexylidenedianiline, 4,4'-(9-fluorenylidene)dianiline, 4,4'-(9-fluorenylidene)bis(N-methylaniline), 4,4'-diaminobenzanilide, 4,4'-oxydianiline, 2,4-bis(4-aminophenylmethyl)aniline, 4-methyl-m-phenylenediamine, 2-methyl-m-phenylenediamine, N,N'-di-sec-butyl-p-phenylenediamine, 2-chloro-p-phenylenediamine, 2,4,6-trimethyl-m-phenylenediamine, diethyltoluenediamine (primarily a mixture comprising 2,4-diethyl-6-methyl-m-phenylenediamine and 4,6-diethyl-2-methyl-m-phenylenediamine), bis(methylthio)toluenediamine (primarily a mixture comprising 6-methyl-2,4-bis(methylthio)-m-phenylenediamine and 2-methyl-4,6-bis(methylthio)-m-phenylenediamine), 4,6-dimethyl-m-phenylenediamine and trimethylenebis(4-aminobenzoate). Of these, the use of an aromatic polyamine as the polyamine is preferred in cases where a cured material is to be obtained which exhibits a still higher level of heat resistance and elastic modulus, and low coefficient of linear expansion.

In accordance with the present invention, it is also possible to employ a modified aforesaid polyamine, for example a compound in which some of the active hydrogens are replaced by 2-cyanoethyl groups or hydroxybenzyl groups, etc, while still leaving at least two active hydrogens unreacted. Examples of modification reactions are addition reactions with an epoxy compound, acrylonitrile or an acrylate ester, the Mannich reaction using formaldehyde and a phenol compound, and amide formation by means of a carboxylic acid derivative

Now, in accordance with the present invention, although the structure is somewhat different from that of an ordinary polyamine, dicyandiamide is also included amongst the polyamines since its curing reaction is the same as that of a polyamine.

In accordance with the present invention, since it is preferred that the epoxy resin composition be a liquid at room temperature (25°C) and that it has low viscosity, the polyamine employed, in particular the aromatic polyamine, should be liquid. Examples of liquid aromatic polyamines are diethyl toluenediamine, bis(methylthio)toluenediamine, 4,4'-methylenebis(2-ethylaniline) and 4,4'-methylenebis(2-isopropyl-6-methylaniline), but diethyl toluenediamine is most preferred. Furthermore, 4,4'-diaminodiphenylsulfone and 3,3'-diaminodiphenylsulfone have advantages such as the cured products obtained therewith having high heat resistance, and they are favourably employed as the chief component of a curing agent for prepreg use, and are preferably employed in the form of a mixture with a liquid aromatic polyamine in a liquid epoxy resin composition.

Again, in accordance with the present invention, aliphatic polyamines with a ring structure in the molecule, that is to say alicyclic polyamines, are favourably employed as the polyamine since they are of low viscosity and a cured material of high heat resistance is obtained. Examples of alicyclic polyamines having a cyclic structure in the molecule are isophoronediamine, 4,4'-methylenebis-cyclohexylamine, 4,4'-methylenebis(2-methylcyclohexyamine), bis(aminomethyl)norbornane, 1,2-cyclohexanediamine and 1,3-bisaminomethylcyclohexane

In accordance with the present invention, component (C) is a latent acid catalyst. This latent acid catalyst is a compound which essentially does not function as an acid catalyst in the temperature region in the vicinity of room temperature, 25°C, but in the high temperature region in which the curing of the epoxy is carried out, normally 70-200°C, it either itself functions as an acid catalyst or produces chemical species which serve as an acid catalyst. In the case of the production of chemical species which serve as an acid catalyst, this may be brought about due to thermal reaction alone or by reaction with epoxy resin or polyamine present in the system.

In the present invention, the latent acid catalyst should be employed in a state completely dissolved in the resin composition, at least immediately prior to the impregnation of the reinforcing fibre.

Consequently, component (C) needs to be soluble in component (A) or in component (B).

Here, soluble in component (A) or in component (B) means that when the latent acid catalyst and the component (A) or component (B) are mixed together at a specified compositional ratio and stirred, a uniform mixed liquid can be formed. Here, forming a uniform mixed liquid indicates that at least 3 parts by weight, and preferably at least 5 parts by weight, of the latent acid catalyst substantially dissolves per 100 parts by weight of component (A) or component (B) at 25°C.

Where it is not soluble in either component (A) or in component (B), it is therefore then either added in a solution state by employing a suitable solvent, or it is added still as a solid. However, when added as a solution then, in the case where the solvent employed has a low boiling point, this may cause voids to be produced in the composite material obtained, and where the solvent has a high boiling point there may be impaired heat resistance or impaired elastic modulus of the cured material obtained due to action as a so-called plasticizer. On the other hand, if added while still solid, it is difficult to uniformly disperse the acid catalyst or precursor thereof within the reinforcing fibre bundles, and local curing defects may arise. This is particularly marked in the case where a low viscosity epoxy resin is used.

Specific examples of component (C) are strong acid esters and complexes of Lewis acids and bases.

Examples of the strong acid esters are the esters of sulfuric acid, sulfonic acid, phosphoric acid, phosphinic acid and phosphonic acid. In the case where the strong acid is a so-called polybasic acid, in order to provide 'latency' it is necessary that the ester be one in which all the hydrogen atoms which can dissociate in the molecule are replaced by organic substituent groups.

Examples of the complexes of Lewis acid and base are those which dissociate at high temperature to produce Lewis acid. The Lewis acid is preferably boron trifluoride, boron trichloride or other such boron halide, phosphorus pentafluoride or antimony pentafluoride. Furthermore, an organic amine is preferred as the base. Specific examples are the boron trifluoride/aniline complex, boron trifluoride/p-chloroaniline complex, boron trifluoride/ethylamine complex, boron trifluoride/isopropylamine complex, boron trifluoride/benzylamine complex, boron trifluoride/dimethylamine complex, boron trifluoride/diethylamine complex, boron trifluoride/dibutylamine complex, boron trifluoride/piperidine complex, boron trifluoride/dibenzylamine complex and boron trichloride/dimethyloctylamine complex. These complexes are all outstanding in their solubility in organic compounds but, amongst them, the boron trifluoride/piperidine complex and/or the boron trichloride/dimethyloctylamine complex are outstanding in the pot life of the mixture, and are especially favourably employed.

In the present invention, as an additional component (D), there is preferably employed an aromatic glycidyl ether type epoxy resin and/or an aromatic glycidyl amine type epoxy resin. These epoxy resins have fairly high viscosity but by the incorporation thereof into the resin composition along with component (A), the elastic modulus and the heat resistance of the cured material obtained can be raised.

Examples of the aromatic glycidyl ether type epoxy resin are bisphenol A type epoxy resins, bisphenol F type epoxy resins, bisphenol S type epoxy resins, tetrabromobisphenol A type epoxy resins, glycidyl ethers of novolaks obtained from phenol, alkylphenols and halophenols, the glycidyl ether of the adduct of dicyclopentadiene and phenol (Chemical Formula IV), resorcinol diglycidyl ether, hydroquinone diglycidyl ether, 4,4'-dihydroxy-3,3',5,5'-tetramethylbiphenyl diglycidyl ether (Chemical Formula I, R¹ = CH₃), 4,4'-dihydroxybiphenyl diglycidyl ether (Chemical Formula I, R¹ = H), the diglycidyl ether of 1,6-dihydroxynaphthalene (Chemical Formula III, naphthalene ring bonding position = 1,6-), the diglycidyl ether of 9,9-bis(4-hydroxyphenyl)fluorene (Chemical Formula II), the triglycidyl ether of tris(p-hydroxyphenyl)methane and the tetraglycidyl ether of tetrakis(p-hydroxyphenyl)ethane.

Of these aromatic glycidyl ether type epoxy resins, the epoxy resins represented by chemical formulae (I) to (V) are particularly preferred in that the heat resistance, modulus and elongation of the cured material are outstanding. 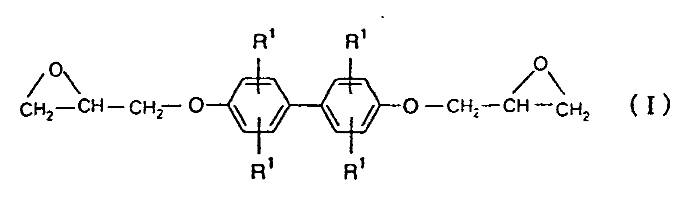 (R¹ in the formula represents hydrogen or a C₁₋₄ alkyl group)

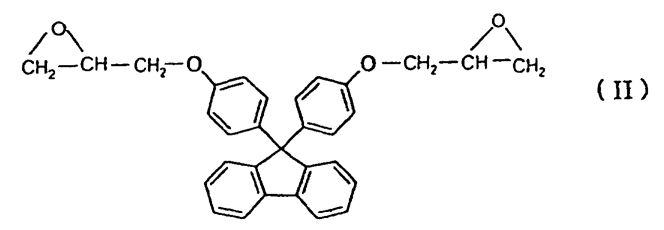

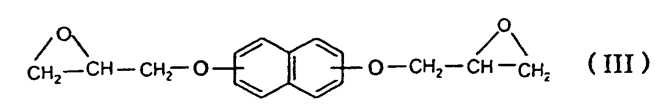

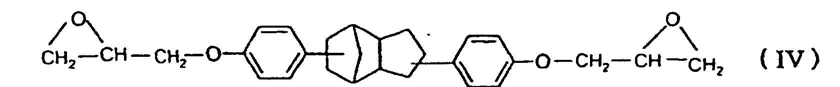

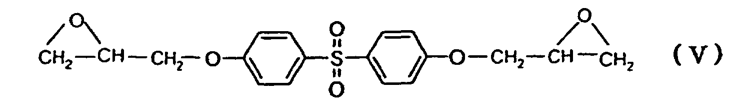

Accordingly, the component(D) may comprise at least one type of aromatic glycidyl ether type epoxy resin represented by respective structural formulae (I) to (V) given above.

Examples of the aromatic glycidyl amine type epoxy resin are tetraglycidyl-4,4-diaminodiphenylmethane and tetraglycidyl-m-xylylenediamine.

Again, examples of epoxy resins which combine both aromatic glycidyl ether type epoxy resin and aromatic glycidyl amine type epoxy resin structures are triglycidyl-m-aminophenol, triglycidyl-p-aminophenol and triglycidyl-4-amino-3-methylphenol but, in the present invention, epoxy resins which combine both aromatic glycidyl ether type epoxy resin and aromatic glycidyl amine type epoxy resin structures are included amongst the aromatic glycidyl amine type resins.

Now, the use of an aromatic glycidyl amine type epoxy resin is preferred for obtaining a cured material of high heat resistance. Specific examples of preferred aromatic glycidyl amine type epoxy resins are tetraglycidyl-4,4-diaminodiphenylmethane, triglycidyl-m-aminophenol, triglycidyl-p-aminophenol and triglycidyl-4-amino-3-methylphenol.

It is also possible to include epoxy resins other than the aforesaid constituent component (A) and component (D) in the epoxy resin composition of the present invention. Specific examples are diglycidyl phthalate, diglycidyl terephthalate and triglycidyl isocyanurate.

The mechanical properties of the fibre-reinforced composite material are influenced by the various properties of the matrix.

The elastic modulus of the matrix influences the fibre-direction compression strength and tensile strength of the fibre-reinforced composite material, and the higher the value thereof the better. Consequently, it is preferred that the cured product of the epoxy resin composition of the present invention has a high elastic modulus. Specifically, it is preferred that the flexural modulus of elasticity of the cured material obtained by curing for 2 hours at 180°C be at least 3.4 GPa.

The glass transition temperature of the matrix influences the heat resistance of the fibre-reinforced composite material. It is preferred that the cured product of the epoxy resin composition of the present invention has a high glass transition temperature. Specifically, it is preferred that the glass transition temperature of the cured material obtained by curing for 2 hours at 180°C be at least 180°C.

The coefficient of linear expansion of the matrix has an influence on thermal stresses within the fibre-reinforced composite material, which influence the strength of the composite material. The coefficient of linear expansion of the cured product of the epoxy resin composition of the present invention is preferably as small as possible in order to reduce thermal stresses. Specifically, the coefficient of linear expansion of the cured material obtained by curing for 2 hours at 180°C is preferably no more than 6.5 x 10⁻⁵ K⁻¹.

The epoxy resin composition based on the present invention is suitably employed in the production of fibre-reinforced composite materials employing RTM (Resin Transfer Moulding). RTM here refers to a method of obtaining a moulded article comprising a fibre-reinforced composite material, in which the reinforcing fibre substrate or preform is arranged within a mould, and then the reinforcing fibre impregnated by injecting the liquid-state epoxy resin composition into the mould interior, after which heating is carried out and the resin cured.

As the reinforcing fibre substrate there is preferably employed reinforcing fibre processed in the form of a mat, woven material, knit, braid, unidirectional sheet or the like. The reinforcing fibre used is preferably carbon fibre, glass fibre or aramid fibre, and it is especially preferred that there be used carbon fibre outstanding in its specific strength and specific modulus, in order to obtain a lightweight and high performance composite material.

In moulding a fibre-reinforced composite material of simple form such as a sheet, reinforcing fibre substrate which has been cut to a specified shape may be arranged directly inside the mould.

In producing a fibre-reinforced composite material with a three-dimensional form, there is preferably employed a method in which the reinforcing fibre substrate is shaped beforehand to a specific shape to produce a preform, and this then arranged in the mould. In order to fix the shape, stitching can be carried out or bonding may be performed with a small amount of resin.

In order to ensure impregnation of the reinforcing fibre, it is advantageous to employ a high injection temperature so as to reduce the viscosity, but if the temperature is too high then the resin curing reaction proceeds during the injection, so that the viscosity rises and gelling may occur. At the same time, equipment and heating costs are raised, and the economics impaired. From this point of view, it is preferred that the injection temperature lies in the range 25-50°C. In order to carry out injection under these conditions, the epoxy resin composition of the present invention should have a viscosity at 40°C of no more than 500 cp and preferably no more than 400 cp. If the reactivity is high at the injection temperature and the viscosity increases during the injection process, moulding becomes difficult. Thus, the epoxy resin composition of the present invention also preferably has a viscosity not exceeding 500 cp, and in particular no more than 400 cp, after the elapse of 2 hours at 40°C.

Following the completion of the injection of the resin composition, the mould is heated and the resin composition is cured. The curing temperature is preferably in the range 70 to 200°C. Again, the curing may be carried out in a number of steps of different temperature.

The higher the curing temperature the higher the heat resistance of the fibre-reinforced composite material, but as the heating temperature within the mould is raised so heating and equipment costs are raised, and the economics is adversely affected. It is preferred, in terms of achieving both satisfactory cost and heat resistance of the fibre-reinforced composite material, that the curing be carried out at a comparatively low temperature within the mould, specifically 70-100°C, after which the material is removed from the mould and subjected to post-curing at a comparatively high temperature, specifically 150-200°C, using a device such as an oven. In the case where post-curing is conducted, if the curing temperature within the mould is 70-80°C, then hot water can be used as the heat source, which is outstandingly cost-effective. Hence, this is particularly preferred.

The epoxy resin composition based on the present invention is ideal for use in the moulding methods, such as VARTM (Vacuum-assisted Resin Transfer Moulding), VIMP (Variable Infusion Moulding Process), TERTM (Thermal Expansion RTM), RARTM (Rubber-Assisted RTM), RIRM (Resin Injection Recirculation Moulding), CRTM (Continuous RTM), CIRTM (Co-injection Resin Transfer Moulding), RLI (Resin Liquid Infusion) and SCRIMP (Seeman's Composite Resin Infusion Moulding Process), which are described in a review of RTM (SAMPE Journal, Vol.34, No.6, pp 7-19).

Furthermore, the epoxy resin composition based on the present invention can be suitably used in the production of fibre-reinforced composite materials employing prepregs. Here, a prepreg means an intermediate substrate material having the form of a sheet or strands comprising reinforcing fibre impregnated with semi-solid or high viscosity epoxy resin composition. After superimposing such prepreg, or winding around a support (mandrel), heating is carried out and shaping effected, and the fibre-reinforced composite material obtained.

In addition, the epoxy resin composition based on the present invention can also manifest the characteristics of low viscosity and excellent impregnation into reinforceing fibre in hand lay-up, filament winding and pultrusion, etc, and is suitably employed in such methods.

Embodiments of the present invention will now be explained in still more specific detail with reference to the following Examples and Comparative Examples. In these Examples, the measurements of the properties were based on the following methods. The details for each of the Examples and Comparative Examples are shown together in Table 1.

### <Resin Composition Viscosity Measurement>

The epoxy resin (liquid A) and curing agent or mixture of curing agent and latent acid catalyst (liquid B) were mixed together in specified proportions at 25°C, and then the viscosity of the liquid mixture measured at 25°C and 40°C using a cone and plate type rotary viscometer in accordance with JIS 28803. The instrument used was a model EHD made by Toki Sangyo. The rotor employed here was a 1° 34' x R24 rotor. The rotation rate was set by selecting a rate of rotation from within the range 2.5 to 20 rpm such that an appropriate torque was obtained. The amount of sample was 1 cm³. Furthermore, the viscosity at 40°C was also measured by the aforesaid method after introducing 100 g of the mixed liquid into a cylindrical polyethylene cup of internal diameter 50 mm and height 75 mm, and then leaving for 2 hours in a constant temperature tank at 40°C.

### <Preparation of the Cured Resin Sheet>

After mixing together aforesaid liquid A and liquid B in specified proportions, the mixture was injected into a mould having a sheet-shaped cavity of thickness 2 mm and into a mould having a sheet-shaped cavity of thickness 5 mm, and then cured resin sheets obtained by heat treatment in an oven under the following conditions:-
(1) temperature raised at a rate of 1.5°C/min from room temperature 25°C to 110°C;
(2) held for 2 hours at 110°C;
(3) temperature raised at a rate of 1.5°C/min from 110°C to 180°C;
(4) held for 2 hours at 180°C; and
(5) temperature lowered from 180°C to 30°C at a rate of 2.5°C/min.

### <Measurement of the Glass Transition Temperature of the Cured Resin Material>

Using a small piece of cured resin sheet as the sample material, a DSC measurement was carried out at a heating rate of 40°C/min by means of a DSC measurement instrument TA3000 (model number; produced by Mettler). The centre point of the glass transition region was read off from the plot of heat flow against time, and this temperature was taken as the glass transition temperature.

### <Measurement of the Elastic Modulus of the Cured Resin>

The flexural modulus of elasticity of the cured resin sheet was measured in accordance with JIS K7203.

### <Measurement of the Coefficient of Linear Expansion of the Cured Resin Material>

The coefficient of linear expansion of cured resin material cut out in the form of a 5 mm x 5 mm x 10 mm block was measured in accordance with JIS K7197. The instrument used was a TMA2940 Thermomechanical Analyser made by TA Instruments. Measurement was carried out at heating and cooling rates of 3°C/min within the range 25-160°C, and the coefficient of linear expansion determined from the dimensional change between 25°C and 135°C (average value of the heating and cooling measurements).

### <Production of Fibre-reinforced Composite Material by means of the RTM Method>

There was used a four-cornered mould comprising upper and lower mould plates and provided with a 300 mm (length) x 300 mm (width) x 1.3 mm (height) box cavity, with a resin injection hole in the centre of the lower mould plate.

Furthermore, as the reinforcing fibre substrate, there was used carbon fibre cloth CF6273H (employing T700GC-12K, weight per unit area 190 g/m², made by Toray Industries Inc.), cut in the form of a square of sides 280 mm with each side being parallel or perpendicular to the reinforcing fibre.

6 sheets of this reinforcing fibre substrate were arranged superimposed in the mould and the mould then closed. Next, epoxy resin composition which had been subjected to defoaming for 15 minutes under reduced pressure at 40°C was injected at an injection pressure of 0.3 MPa into the mould, which was held at 40°C. The injection took 30 minutes. Thereafter, curing was carried out by heating for 12 hours with the mould interior at 80°C. After release from the mould, post-curing was carried out for 2 hours at 180°C in an oven, and the fibre-reinforced composite material obtained.

### <Measurement of the Tensile Strength of the Fibre-reinforced Composite Material>

The measurement of the tensile strength was carried out using a model 4208 Instron tensile tester (manufactured by the Instron Corp.) based on ASTM-D3039. The test-piece dimensions were 25.4 mm (width) x 229 mm (length), the environmental temperature was 23°C and the crosshead speed was 1.27 mm/s.

### <Glass Transition Temperature of Fibre-reinforced Composite Material>

A small piece of the fibre-reinforced composite material was used as the test material, and DSC measurement was carried out at a heating rate of 40°C/min by means of a DSC measurement instrument TA3000 (model number; produced by Mettler). The centre point of the glass transition region was read off from the plot of heat flow against time, and this temperature was taken as the glass transition temperature.

### <Resin Starting Materials>

The following commercial products were employed in the preparation of the epoxy resin composition.

### (1) Epoxy resin

### <Constituent Component A Epoxy Resin>

"Celoxide" 2021P (registered trademark, produced by Daicel Chemical Industries): 3,4-epoxycyclohexylmethyl 3,4-epoxycyclohexanecarboxylate (alicyclic epoxy resin)

### <Constituent Component D Epoxy Resin>

"Epikote" 828 (registered trademark, produced by the Japan Epoxy Resin Co.): bisphenol A type epoxy resin (aromatic glycidyl ether type epoxy resin)

"Epikote" 630 (registered trademark, produced by the Japan Epoxy Resin Co.): triglycidyl-p-aminophenol (aromatic glycidyl amine type epoxy resin)

"Araldite" MY721 (registered trademark, produced by Vantico) : tetraglycidyl-4,4-diaminodiphenylmethane (aromatic glycidyl amine type epoxy resin)

"Epikote" YX4000H (registered trademark, produced by the Japan Epoxy Resin Co.): 4,4'-dihydroxy-3,3',5,5'-tetramethylbiphenyl diglycidyl ether (aromatic glycidyl ether type epoxy resin)

### <Other Epoxy Resin>

"Heloxy" 68 (registered trademark, produced by the Japan Epoxy Resin Co.): neopentylene glycol diglycidyl ether (aliphatic glycidyl ether type epoxy resin)

### (2) Constituent Component (B)

"Epicure" W (registered trademark, produced by the Japan Epoxy Resin Co.): mixture of 2,4-diethyl-6-methyl-m-phenylenediamine and 4,6-diethyl-2-methyl-m-phenylenediamine (aromatic polyamine)

"Ancamine" 2049 (registered trademark, produced by Air Products): 4,4'-methylenebis (2-methylcyclohexylamine) (alicyclic polyamine)

### (3) Constituent component (C)

Boron trifluoride/piperidine complex (produced by the Stella Chemifa Corp.) (latent acid catalyst)

Accelerator DY 9577 (produced by Vantico): boron trichloride dimethyloctylamine complex (latent acid catalyst)

### Example 1

A resin composition of composition as shown in Table 1 was produced. In Table 1, the mixing ratios of the starting materials are expressed by weight. Here, liquid B was prepared by mixing the two types of starting material (curing agent and latent acid catalyst) at room temperature (25°C), then raising the temperature to 70°C, after which stirring was carried out for 30 minutes to produce a uniform solution, which was allowed to cool to room temperature. Even after cooling, liquid B remained in a uniform solution state. The resin composition obtained by mixing together liquid A and liquid B at room temperature had a low viscosity and when cured under the aforesaid conditions there was obtained a cured material with a high elastic modulus.

### Comparative Example 1

A resin composition of composition as shown in Table 1 was produced. The resin composition obtained after mixing liquid A and liquid B together at room temperature 25°C was of quite high viscosity when compared to Example 2 and Example 3.

### Comparative Example 2

A resin composition of composition as shown in Table 1 was produced. Here, liquid A was prepared by mixing together the two starting materials at room temperature (25°C), and then further stirring. The resin composition obtained after mixing liquid A and liquid B together at room temperature was of low viscosity in the same way as in Example 2 and Example 3, but when curing was carried out under the aforesaid conditions the heat resistance of the cured material obtained was inferior compared to Example 2 and Example 3. This demonstrates the fact that the incorporation of a low-viscosity aliphatic glycidyl ether type epoxy resin has the side effect of lowering the glass transition temperature of the cured material.

### Comparative Example 3

A resin composition of composition as shown in Table 1 was produced. The resin composition obtained after mixing liquid A and liquid B together at room temperature (25°C) was of low viscosity but, when cured under the aforesaid conditions, the glass transition temperature of the cured material obtained was very low compared to Example 1. This shows that if there is no latent acid catalyst present, the reaction of the alicyclic epoxy resin and the polyamine curing agent is extremely slow, so only partial curing occurs.

### Examples 2 and 3

Resin compositions of composition as shown in Table 1 were produced. Here, liquid A was prepared by mixing together the two starting materials at room temperature (25°C) and then further stirring. On the other hand, liquid B was prepared by mixing together the two starting materials at room temperature, then heating to 70°C, after which stirring was carried out for 30 minutes to produce a uniform solution and this was left to cool to room temperature. Even after leaving liquid B to cool, it still remained in a uniform solution state. The resin composition obtained after mixing liquid A and liquid B together at room temperature was of low viscosity and, when curing was carried out under the aforesaid conditions, a cured material of high heat resistance was obtained compared to use of just an alicyclic epoxy resin as the epoxy resin.

### Example 4

A resin composition of composition as shown in Table 1 was produced. Here, liquid A was prepared by mixing together the two starting materials at room temperature (25°C), and then further stirring. On the other hand, liquid B was prepared by mixing together the two starting materials at room temperature, then heating to 70°C, after which stirring was carried out for 30 minutes to produce a uniform solution and this was left to cool to room temperature. Even after leaving liquid B to cool, it still remained in a uniform solution state. The resin composition obtained by mixing liquid A and liquid B at room temperature was of low viscosity, and when cured under the aforesaid conditions there was obtained a cured material of high elastic modulus.

### Examples 5, 6 and 7

Resin compositions of composition as shown in Table 1 were produced. Here, liquid A was prepared by mixing together the two or three starting materials at room temperature (25°C), and then further stirring. On the other hand, liquid B was prepared by mixing together the two starting materials at room temperature, then heating to 70°C, after which stirring was carried out for 30 minutes to produce a uniform solution and this was left to cool to room temperature. Even after leaving liquid B to cool, it still remained in a uniform solution state. The resin composition obtained by mixing liquid A and liquid B at room temperature was of low viscosity, and when cured under the aforesaid conditions there was obtained a cured material of high heat resistance and elastic modulus.

### Examples 8, 9 and 10

Using the resin compositions shown in Examples 5, 6 and 7, fibre-reinforced composite materials were produced by the RTM method. Table 2 shows the results of measurements of their tensile strength and glass transition temperature. It was confirmed that they possessed high strength and heat resistance.

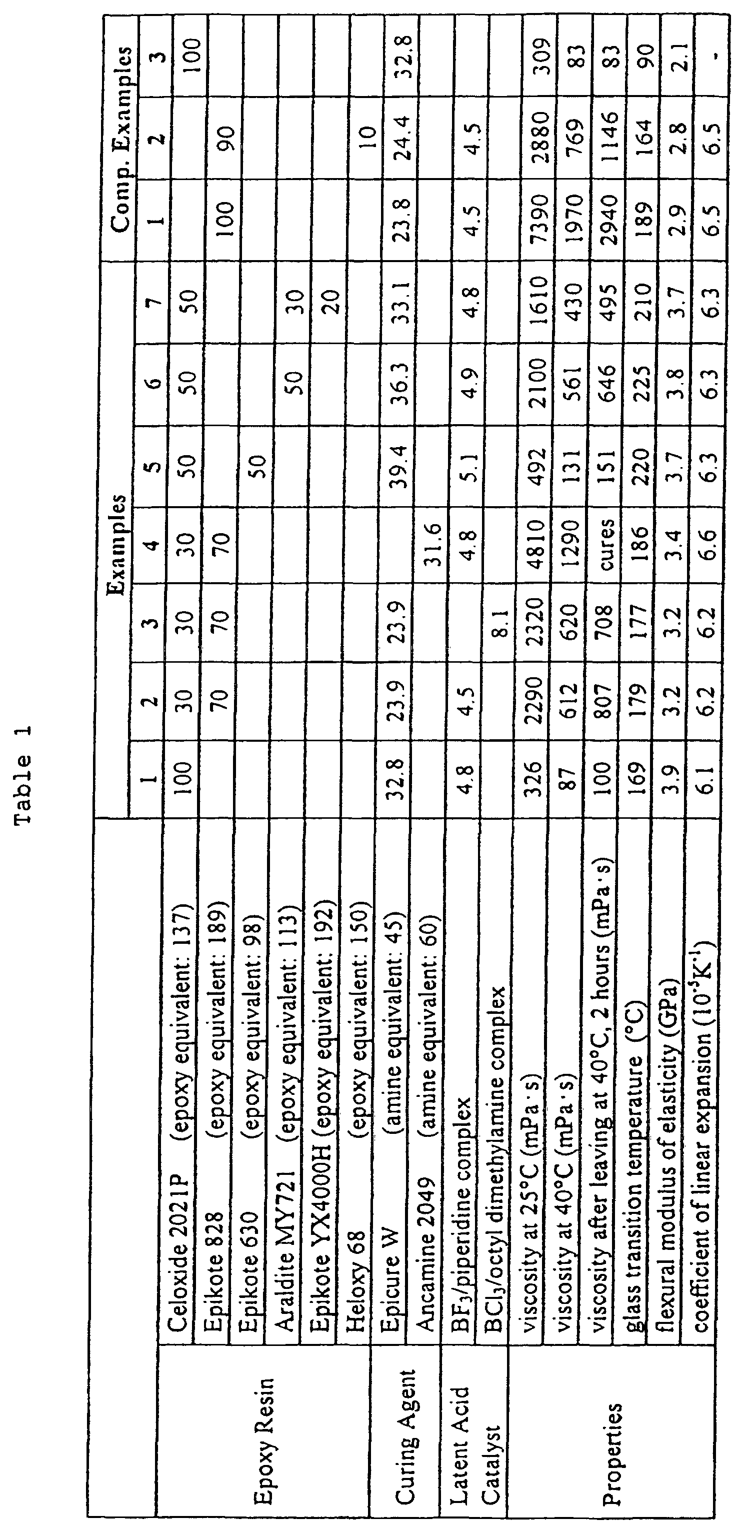

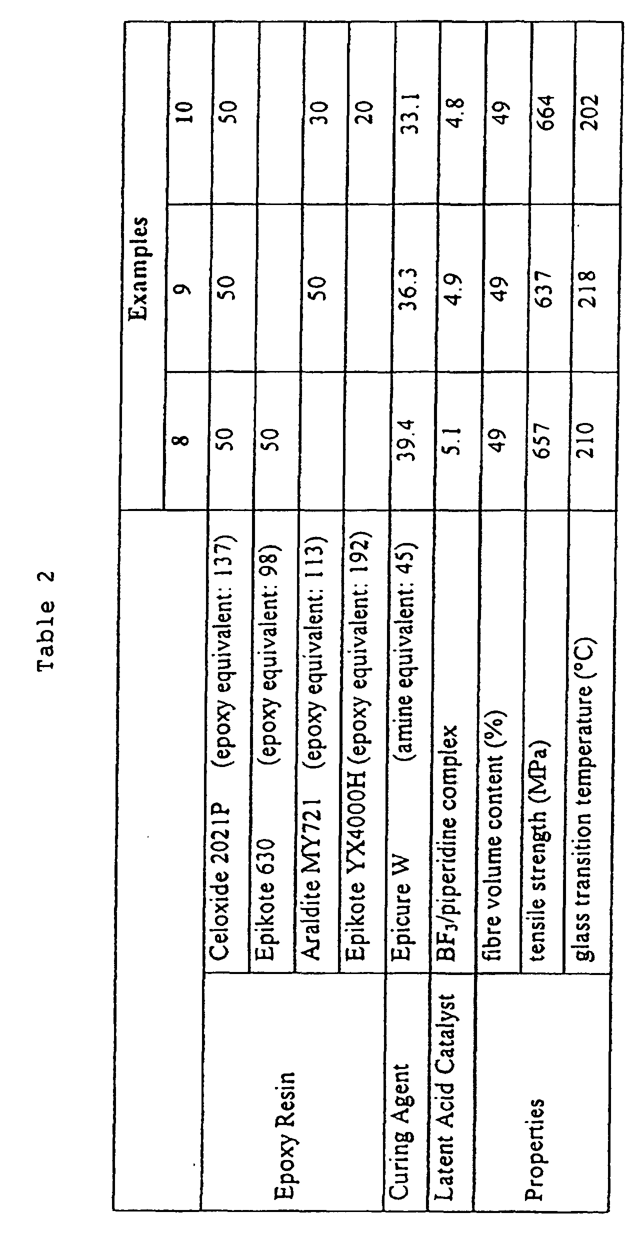

### Industrial Application Potential

In accordance with the present invention, there is obtained an epoxy resin composition of low viscosity and outstanding cured product heat resistance, which is extremely valuable when producing the structural components of aircraft, motor vehicles and the like by RTM.

According to the present invention it is possible to suppress effectively the rise in viscosity which results when a thermoplastic resin is incorporated to enhance the toughness of the cured product, and there is obtained an epoxy resin composition which combines processability and high toughness.

Fibre-reinforced composite materials obtained from an epoxy resin composition based on the present invention, can be used advantageously for aircraft components, spacecraft components, artificial satellite components, motor vehicle components, railway carriage components, boat components, building components, flywheels, pressure vessels, wind-powered generator blades, oil risers, sports goods and the like. Amongst these, they are ideal for use as aircraft components, spacecraft components and artificial satellite components where high level heat resistance and strength are demanded.

## Claims

1. An epoxy resin composition for a fibre-reinforced composite material which contains the following components (A), (B) and (C) :
(A) alicyclic epoxy resin
(B) polyamine
(C) latent acid catalyst which can dissolve in component (A) or in component (B) and which is of at least one type selected from strong acid esters and complexes of a Lewis acid and a base.

2. An epoxy resin composition according to Claim 1, wherein component (C) is a complex of a Lewis acid and a base.

3. An epoxy resin composition according to Claim 2, wherein the Lewis acid is a boron halide and the base is an amine.

4. An epoxy resin composition according to Claim 3, wherein the boron halide/amine complex is a boron trifluoride/piperidine complex and/or a boron trichloride/dimethyl octylamine complex.

5. An epoxy resin composition according to claim 1 wherein component (c) is an ester of a strong acid selected from sulfuric acid, sulfonic acid, phosphoric acid, phosphinic acid and phosphonic acid.

6. An epoxy resin composition according to any preceding Claim, wherein component (B) is an aromatic polyamine.

7. An epoxy resin composition according to Claim 6, wherein the aromatic polyamine is a liquid at room temperature (25°C).

8. An epoxy resin composition according to Claim 7, wherein the aromatic polyamine which is a liquid at room temperature (25°C) is diethyl toluenediamine.

9. An epoxy resin composition according to any preceding Claim, wherein component (A) is an epoxy resin having a plurality of 1,2-epoxycyclohexane rings within the molecule.

10. An epoxy resin composition according to Claim 9, wherein the epoxy resin having a plurality of 1,2-epoxycyclohexane rings within the molecule is 3,4-epoxycyclohexylmethyl -3,4-epoxycyclohexane carboxylate.

11. An epoxy resin composition according to any preceding Claim, which includes an additional component (D):
(D) aromatic glycidyl ether type epoxy resin and/or aromatic glycidyl amine type epoxy resin.

12. An epoxy resin composition according to Claim 11, wherein component (D) is an aromatic glycidyl amine type epoxy resin.

13. An epoxy resin composition according to Claim 11, wherein component (D) comprises at least one type of aromatic glycidyl ether type epoxy resin represented by respective structural formulae (I) to (V): 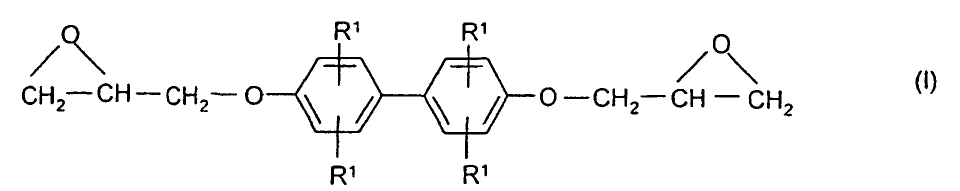 (R¹ represents hydrogen or a C₁₋₄ alkyl group)

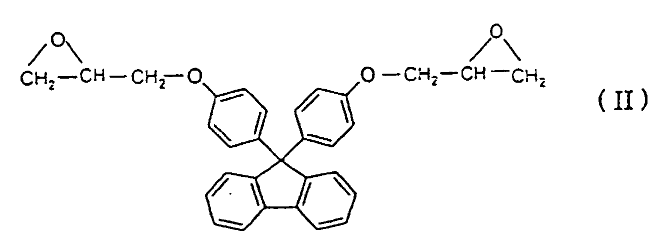

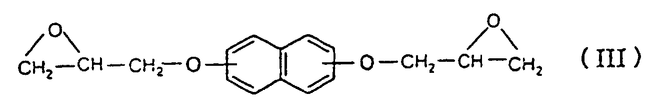

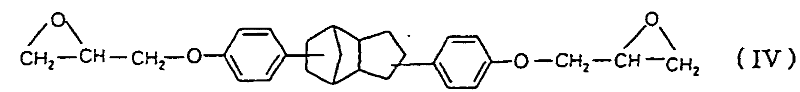

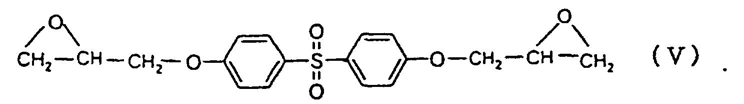

14. An epoxy resin composition according to any preceding Claim, wherein the viscosity at 40°C is no more than 500 cp.

15. An epoxy resin composition according to Claim 14, wherein the viscosity after the elapse of 2 hours at 40°C is no more than 500 cp.

16. An epoxy resin composition according to any preceding Claim, wherein the glass transition temperature of the cured material obtained by curing for 2 hours at 180°C is at least 180°C.

17. An epoxy resin composition according to any preceding Claim, wherein the flexural modulus of elasticity of the cured material obtained by curing for 2 hours at 180°C is at least 3.4 GPa.

18. An epoxy resin composition according to any preceding Claim, wherein the coefficient of linear expansion of the cured material obtained by curing for 2 hours at 180°C is no more than 6.5 x 10⁻⁵ K⁻¹.

19. A fibre-reinforced composite material containing reinforcing fibre and an epoxy resin composition according to any one of Claims 1 to 18.

20. A fibre-reinforced composite material according to Claim 19, wherein the reinforcing fibre is carbon fibre.

21. A fibre-reinforced composite material according to Claim 19 or claim 20, wherein the volume content of the reinforcing fibre is 50% to 85%.

22. A method for the production of a fibre-reinforced composite material in which reinforcing fibre substrate or preform arranged within a mould is impregnated by the injection of an epoxy resin composition according to any one of Claims 1 to 18, and then heating and curing effected.

23. A method according to Claim 22, wherein the injection temperature of the epoxy resin composition is 25-50°C and the curing temperature is 70-200°C.

24. A method according to Claim 23, wherein, after curing at 70-100°C and removing from the mould, postcuring is also carried out at 150-200°C.

25. A method according to any one of Claims 22 to 24, wherein the volume content of reinforcing fibre is 50% to 85%.

## Revendications

1. Composition de résine époxy pour une matière composite renforcée de fibres qui contient les composants (A), (B) et (C) qui suivent:
(A) résine époxy alicyclique
(B) polyamine
(C) catalyseur d'acide latant qui peut se dissoudre dans le composant (A) ou dans le composant (B) et qui est d'au moins un type sélectionné parmi des esters d'acides forts et complexes d'un acide de Lewis et d'une base.

2. Composition de résine époxy selon la revendication 1 où le composant (C) est un complexe d'un acide de Lewis et d'une base.

3. Composition de résine époxy selon la revendication 2 où l'acide de Lewis est un halogénure de bore et la base est une amine.

4. Composition de résine époxy selon la revendication 3 où le complexe halogénure de bore/amine est un complexe trifluorure de bore/pipéridine et/ou un complexe trichlorure de bore/diméthyl octylamine.

5. Composition de résine époxy selon la revendication 1 où le composant (C) est un ester d'un acide fort sélectionné parmi acide sulfurique, acide sulfonique, acide phosphorique, acide phosphinique et acide phosphonique.

6. Composition de résine époxy selon toute revendication précédente, où le composant (B) est une polyamine aromatique.

7. Composition de résine époxy selon la revendication 6 où la polyamine aromatique et un liquide à température ambiante (25°C).

8. Composition de résine époxy selon la revendication 7 où la polyamine aromatique qui est un liquide à température ambiante (25°C) et diéthyl toluènediamine.

9. Composition de résine époxy selon toute revendication précédente où le composant (A) est une résine époxy ayant un certain nombre de cycles 1,2-époxycyclohexane dans la molécule.

10. Composition de résine époxy selon la revendication 9 où la résine époxy ayant un certain nombre de cycles 1,2-époxycyclohexane dans la molécule est 3,4-époxycyclohexylméthyl -3,4-époxycyclohexane carboxylate.

11. Composition de résine époxy selon toute revendication précédente, qui contient un composant additionnel (D):
(D) résine époxy du type glycidyl éther aromatique et/ou résine époxy du type glycidyl amine aromatique.

12. Composition de résine époxy selon la revendication 11 où le composant (D) est une résine époxy du type glycidyl amine aromatique.

13. Composition de résine époxy selon la revendication 11, où le composant (D) comprend au moins un type de résine époxy du type glycidyl éther aromatique représenté par les formules de structure respectives (I) à (V): 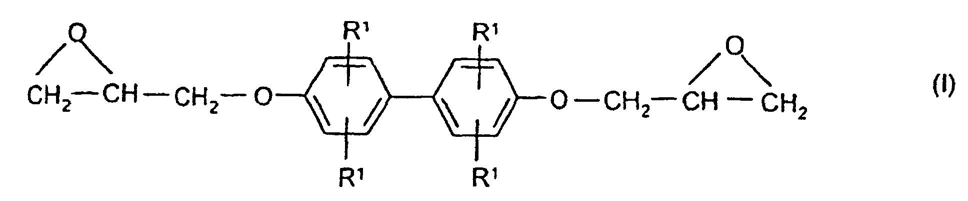 (R¹ représente hydrogène ou un groupe alkyle C₁₋₄)

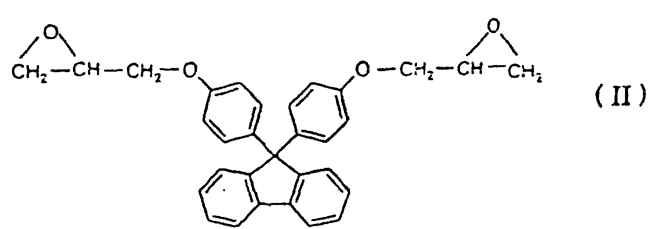

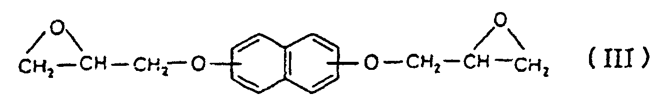

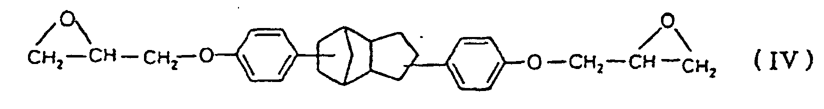

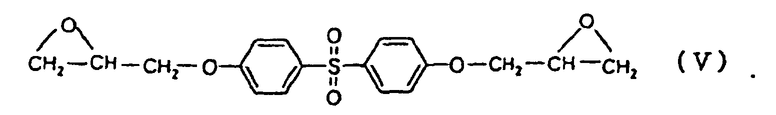

14. Composition de résine époxy selon toute revendication précédente où la viscosité à 40°C ne dépasse pas 500 cp.

15. Composition de résine époxy selon la revendication 14, où la viscosité après écoulement de 2 heures à 40°C ne dépasse pas 500 cp.

16. Composition de résine époxy selon toute revendication précédente, où la température de transition vitreuse de la matière durcie obtenue par durcissement pendant 2 heures à 180°C est d'au moins 180°C.

17. Composition de résine époxy selon toute revendication précédente, où le module d'élasticité à la flexion de la matière durcie obtenue par durcissement pendant 2 heures à 180°C est d'au moins 3,4 GPa.

18. Composition de résine époxy selon toute revendication précédente où le coefficient de dilatation linéaire de la matière durcie obtenue par durcissement pendant 2 heures à 180°C ne dépasse pas 6,5 x 10⁻⁵ K⁻¹.

19. Matière composite renforcée de fibres contenant une fibre de renforcement et une composition de résine époxy selon l'une quelconque des revendications 1 à 18.

20. Matière composite renforcée de fibres selon la revendication 19 où la fibre de renforcement est la fibre de carbone.

21. Matière composite renforcée de fibres selon la revendication 19 ou la revendication 20 où la teneur en volume de la fibre de renforcement est de 50% à 85%.

22. Méthode pour la production d'une matière composite renforcée de fibres dans laquelle le substrat de la fibre de renforcement ou préforme agencé dans un moule est imprégné par l'injection d'une composition de résine époxy selon l'une quelconque des revendications 1 à 18 puis chauffage et durcissement effectués.

23. Méthode selon la revendication 22 où la température d'injection de la composition de résine époxy est de 25-50°C et la température de durcissement est de 70-200°C.

24. Méthode selon la revendication 23, où après durcissement à 70-100°C et enlèvement du moule, un post-durcissement est également effectué à 150-200°C.

25. Méthode selon l'une quelconque des revendications 22 à 24, où la teneur en volume de la fibre de renforcement est de 50% à 85%.

## Patentansprüche

1. Epoxidharzzusammensetzung für einen faserverstärkten Verbundwerkstoff, der die folgenden Komponenten (A), (B) und (C) enthält:
(A) ein alizyklisches Epoxidharz
(B) ein Polyamin
(C) einen latenten Säure-Katalysator, der sich in Komponente (A) oder in Komponente (B) lösen kann und zumindest ein aus Estern starker Säuren und Komplexen aus einer Lewis-Säure und einer Base ausgewählter Typ ist.

2. Epoxidharzzusammensetzung nach Anspruch 1, worin Komponente (C) ein Komplex aus einer Lewis-Säure und einer Base ist.

3. Epoxidharzzusammensetzung nach Anspruch 2, worin die Lewis-Säure ein Borhalogenid und die Base ein Amin ist.

4. Epoxidharzzusammensetzung nach Anspruch 3, worin der Borhalogenid/Amin-Komplex ein Bortrifluorid/Piperidin-Komplex und/oder ein Bortrichlorid/Dimethyloctylamin-Komplex ist.

5. Epoxidharzzusammensetzung nach Anspruch 1, worin Komponente (C) ein Ester einer starken Säure ist, die aus Schwefelsäure, Sulfonsäure, Phosphorsäure, Phosphinsäure und Phosphonsäure ausgewählt ist.

6. Epoxidharzzusammensetzung nach einem der vorangegangenen Ansprüche, worin Komponente (B) ein aromatisches Polyamin ist.

7. Epoxidharzzusammensetzung nach Anspruch 6, worin das aromatische Polyamin bei Raumtemperatur (25 °C) eine Flüssigkeit ist.

8. Epoxidharzzusammensetzung nach Anspruch 7, worin das aromatische Polyamin, das bei Raumtemperatur (25 °C) eine Flüssigkeit ist, Diethyltoluoldiamin ist.

9. Epoxidharzzusammensetzung nach einem der vorangegangenen Ansprüche, worin Komponente (A) ein Epoxidharz mit mehreren 1,2-Epoxycyclohexan-Ringen im Molekül ist.

10. Epoxidharzzusammensetzung nach Anspruch 9, worin das Epoxidharz mit mehreren 1,2-Epoxycyclohexan-Ringen im Molekül 3,4-Epoxycyclohexylmethyl-3,4-epoxycyclohexancarboxylat ist.

11. Epoxidharzzusammensetzung nach einem der vorangegangenen Ansprüche, die eine zusätzliche Komponente (D) umfasst:
(D) Epoxidharz vom aromatischen Glycidylethertyp und/oder Epoxidharz vom aromatischen Glycidylamintyp.

12. Epoxidharzzusammensetzung nach Anspruch 11, worin Komponente (D) ein Epoxidharz vom aromatischen Glycidylamintyp ist.

13. Epoxidharzzusammensetzung nach Anspruch 11, worin Komponente (D) zumindest eines der Epoxidharze vom aromatischen Glycidylethertyp der Strukturformein (I) bis (V) umfasst: 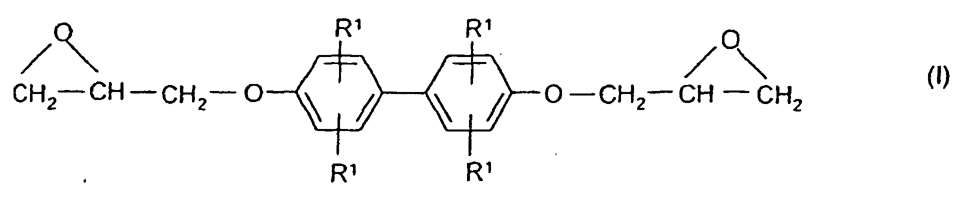 (R¹ steht für Wasserstoff oder eine C₁₋₄-Alkylgruppe)

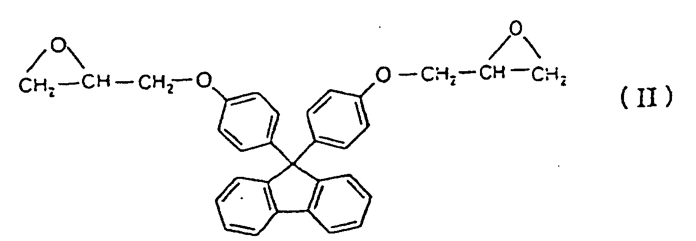

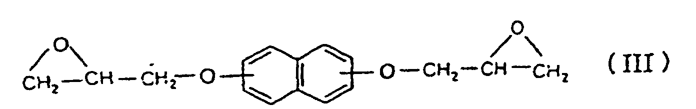

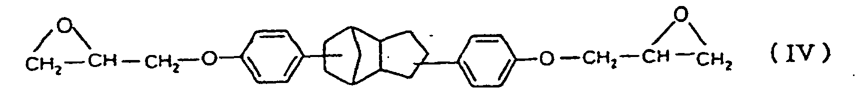

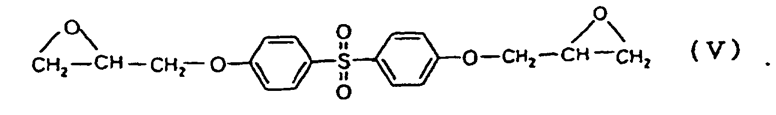

14. Epoxidharzzusammensetzung nach einem der vorangegangenen Ansprüche, worin die Viskosität bei 40 °C nicht mehr als 500 cp beträgt.

15. Epoxidharzzusammensetzung nach Anspruch 14, worin die Viskosität nach 2 Stunden bei 40 °C nicht mehr als 500 cp beträgt.

16. Epoxidharzzusammensetzung nach einem der vorangegangenen Ansprüche, worin die Glastemperatur des durch 2-stündiges Härten bei 180 °C erhaltenen gehärteten Materials zumindest 180 °C beträgt.

17. Epoxidharzzusammensetzung nach einem der vorangegangenen Ansprüche, worin der Biegeelastizitätsmodul des durch 2-stündiges Härten bei 180°C erhaltenen gehärteten Materials zumindest 3,4 GPa beträgt.

18. Epoxidharzzusammensetzung nach einem der vorangegangenen Ansprüche, worin der Längenausdehnungskoeffizient des durch 2-stündiges Härten bei 180 °C erhaltenen gehärteten Materials nicht mehr als 6,5 x 10⁻⁵ K⁻¹ beträgt.

19. Faserverstärkter Verbundwerkstoff, der Verstärkungsfasern und eine Epoxidharzzusammensetzung nach einem der Ansprüche 1 bis 18 umfasst.

20. Faserverstärkter Verbundwerkstoff nach Anspruch 19, worin die Verstärkungsfasern Kohlefasern sind.

21. Faserverstärkter Verbundwerkstoff nach Anspruch 19 oder 20, worin der Volumengehalt der Verstärkungsfasern 50 % bis 85 % beträgt.

22. Verfahren zur Herstellung eines faserverstärkten Verbundwerkstoffs, worin ein Verstärkungsfasersubstrat oder eine Verstärkungsfaservorform in einer Form angeordnet und durch Einspritzen einer Epoxidharzzusammensetzung nach einem der Ansprüche 1 bis 18 imprägniert wird, wonach das Ganze erhitzt und gehärtet wird.

23. Verfahren nach Anspruch 22, worin die Einspritztemperatur der Epoxidharzzusammensetzung 25 bis 50 °C und die Härtungstemperatur 70 bis 200 °C beträgt.

24. Verfahren nach Anspruch 23, worin nach dem Härten bei 70 bis 100 °C und der Entnahme aus der Form eine Nachhärtung bei 150 bis 200 °C durchgeführt wird.

25. Verfahren nach einem der Ansprüche 22 bis 24, worin der Volumengehalt der Verstärkungsfasern 50 % bis 85 % beträgt.
